# EUROPÄISCHE PATENTSCHRIFT

(11) **EP 0 534 322 B1**
(45) Veröffentlichungstag und Bekanntmachung des Hinweises auf die Patenterteilung: **27.03.1996**
(21) Anmeldenummer: 92115979.4
(22) Anmeldetag: 18.09.1992
(51) Int. Cl.: C08F 279/02, C08C 19/22, C08C 19/28, C09D 151/04

(54) **Wasserverdünnbare lufttrocknende Bindemittel, Verfahren zu deren Herstellung und deren Verwendung in lufttrocknenden Überzugsmitteln**
Water-dilutable air-drying binder, process for the preparation thereof, and its use in air-drying coatings
Liant diluable à l'eau et sèchant à l'air, procédé pour sa préparation et son utilisation dans des revêtements sèchant à l'air

(30) Priorität: 26.09.1991 DE 4132077
(43) Veröffentlichungstag der Anmeldung: 31.03.1993
(73) Patentinhaber: Herberts Gesellschaft mit beschränkter Haftung, D-42285 Wuppertal (DE)
(72) Erfinder: Rankl, Franz-Josef, Prof. Dr., W-5600 Wuppertal 1 (DE); Blaga, Aurel, Prof. Dr., W-5600 Wuppertal 1 (DE); Stolzenbach, Heinrich, Dr., W-5600 Wuppertal-Ronsdorf (DE); Patzschke, Hans-Peter, Dr., W-5600 Wuppertal 2 (DE); Kowalzick, Siegfried, verstorben (DE); Gol, Franjo, Dr., W-5090 Leverkusen (DE)
(74) Vertreter: Türk, Gille, Hrabal, Leifert

(56) Entgegenhaltungen:
- EP-A- 0 170 184
- DE-A- 2 144 643
- DE-A- 2 733 274
- DE-A- 2 754 733
- GB-A- 2 048 898

## Beschreibung

Die Erfindung betrifft ein zumindest teilweise neutralisiertes wasserverdünnbares oxidativ trocknendes Bindemittel, das sich zur Herstellung besonders leistungsfähiger lufttrocknender Grundierungen, Füller und Einschichtlacke eignet, sowie das Verfahren zur Herstellung derselben, und deren Verwendung. Die Bindemittel eignen sich beispielsweise auch für wäßrige Überzugsmittel zur Herstellung von Mehrschicht aufbauten.

Wäßrige Überzugsmittel gewinnen aus Umweltschutzgründen in zunehmendem Maße an Bedeutung, weil sie wenig oder keine organischen Lösemittel zur Verarbeitung brauchen. So beschreibt die US-PS 3 511 816 Polymerisate aus relativ niedermolekularen Polybutadienen und Maleinsäureanhydrid, die auf Metallen haftende Überzüge bilden. Diese Produkte werden durch teilweise Neutralisation mit Aminen wasserverdünnbar gemacht und dienen als Bindemittel für wasserverdünnbare Beschichtungssysteme. Um brauchbare Filmbildungseigenschaften zu erhalten, muß die Molmasse des Bindemittels so weit erhöht werden, daß sie aufgrund ihrer hohen Viskosität Verarbeitungsschwierigkeiten bereiten, die durch Lösemittelzusatz ausgeglichen werden müssen.

In der DE-A-27 33 274, DE-A-26 33 362 und DE-A-27 54 733 werden auf Polybutadienöl-Maleinsaureanhydrid-Addukte ungesättigte Monomere aufgepropft, wobei die Anhydridgruppe partiell verestert, amidiert, oder imidiert sein kann. Obwohl diese Polybutadienöl-Bindemittel eine verbesserte Trocknung aufweisen, haben sie in schnelltrocknenden Grundierungen keine voll befriedigende Wasserfestigkeit und Korrosionsbeständigkeit. Die bis heute durchgeführten Versuche zur Verbesserung der physikalischen und chemischen Eigenschaften solcher Bindemittel haben bisher noch nicht vollständig befriedigt.

Aufgabe der Erfindung ist die Bereitstellung von lufttrocknenden Bindemitteln, die zu schnell trocknenden Überzugsmitteln mit guter Wasserfestigkeit, guter Korrosionsbeständigkeit bei ausgezeichneter Vernetzungsreaktivität führen.

Es hat sich gezeigt, daß diese Aufgabe dadurch gelöst werden kann, daß man in ein Polyolefin mit zahlreichen 1,4-Doppelbindungen Carboxylgruppen einführt und mit Bis-(Oxazolin) umsetzt. Nach zumindest teilweiser Neutralisation der restlichen Carboxylgruppen wird bevorzugt in wäßriger Emulsion mit einem Vinylmonomeren pfropfpolymerisiert. Mit diesen erfindungsgemäßen, niedrigviskosen, lösemittelarmen Pfropfpolymerisaten kann ein Überzug auch ohne Zusatz von metallischen Trockenstoffen innerhalb kürzester Zeit bei verschiedenen Temperaturen, bevorzugt bei Raumtemperatur getrocknet werden. Die erhaltenen Überzüge weisen ausgezeichnete Eigenschaften in Bezug auf Wasserfestigkeit und Glanz auf. Bei Zusatz eines metallhaltigen Sikkativs läßt sich ein Überzug von höherer Härte erzielen. Somit zeigen die erfindungsgemäßen ungesättigten Emulsionen besonders günstige Eigenschaften in Bezug auf Trocknung, Wasserfestigkeit und chemische Beständigkeit.

Gegenstand der Erfindung ist daher ein durch Basen zumindest teilweise neutralisiertes Bindemittel zur Herstellung sikkativierter wäßriger Überzugsmittel, auf Basis eines teilweise mit Bis-(2-oxazolin) vernetzten Polydienharzes, mit einer Säurezahl von 50 bis 100, das erhältlich ist durch wasserfreie Umsetzung von
A. 40 bis 80 Gew.% eines oder mehrerer Polydienöle mit einem Gewichtsmittel der Molmasse von 300 bis 5000
B. 5 bis 25 Gew.% einer oder mehrerer ethylenisch, α,β-ungesättigter Carbonsäuren oder deren Anhydriden,
C. 1 bis 10 Gew.% eines oder mehrerer Bis-(2-oxazoline) und
D. 0 bis 20 Gew.% eines oder mehrerer physikalisch härtender Harze und/oder ethylenisch ungesättigter Monomerer,
Überführung mittels zumindest teilweiser Neutralisation in ein wäßriges Medium und Reaktion mit
E. 1 bis 40 Gew.% eines oder mehrerer ethylenisch ungesättigter Monomerer in Gegenwart eines öllöslichen, freie Radikale bildenden Polymerisationsinitiators und gegebenenfalls eines Polymerisationsreglers,
wobei sich die vorstehenden Gewichtsprozente jeweils auf die Summe der Komponenten A,B,C,D und E beziehen.

Bei der Herstellung der erfindungsgemäßen Bindemittel wird bevorzugt so gearbeitet, daß zunächst die Komponenten A bis D jeweils nacheinander ohne Wasserzusatz umgesetzt werden. Die weitere Umsetzung mit den Monomeren E erfolgt in wäßriger Phase nach Zusatz von Wasser, Neutralisationsmittel und gegebenenfalls weiteren Hilfsmitteln, die vor dem Eindispergieren zugesetzt werden.

Als Komponente A werden bevorzugt mehr als 40 Gew.-%, besonders bevorzugt mehr als 50 Gew.-% Polydienöl eingesetzt. Die obere Grenze liegt bevorzugt unter 80 Gew.-%, besonders bevorzugt unter 70 Gew.-%.

Bevorzugte Polydienöle sind Polydiene (A) mit einem Zahlenmittel der Molmasse von 300 bis 5000, bevorzugt 1000 bis 3000, und Viskositäten von 500 - 5000 mPa.s (bei 20^{o}C), eine Jodzahl nach Wijs von 200 - 500 g Jod/100 g Substanz, und weisen bevorzugt 1,4-cis- bzw. 1,4-trans-Verknüpfung auf. Es handelt sich um dem Fachmann geläufige handelsübliche Produkte. Beispiele sind Polybutadienöle verschiedener Konfiguration oder Polypentadienöle. Es können auch Mischungen solcher Polybutadienöle mit verschiedener Molmasse oder unterschiedlicher Konfiguration, z.B. auch Polypentadienöle, verwendet werden. Bevorzugt werden Polybutadienöle mit mehr als 60 % 1,4-cis-Anteil und möglichst niedrigem 1,2-Vinylgruppengehalt (bevorzugt unter 5%), wobei sich die Prozentangaben jeweils auf die Anzahl der Doppelbindungen beziehen. Butadiencopolymerisate mit bis zu 25 Gew.% anderer Comonomerer wie Styrol, Methylstyrol, Vinyltoluol, (Meth)Acrylsäure, Vinylessigsäure, Maleinsäure, sowie Derivate, z.B. Ester, der genannten Säuren, und deren Mischungen sind ebenfalls einsetzbar.

Als Komponente B werden bevorzugt mehr als 5, besonders bevorzugt mehr als 8 Gew.-% α,β-ungesättigte Carbonsäure oder deren Anhydride eingesetzt. Die obere Grenze liegt bevorzugt unter 25 Gew.-%, besonders bevorzugt unter 23 Gew.-%.

α,β-ethylenisch ungesättigte Mono- bzw. Dicarbonsäuren (B) sind beispielsweise Acrylsäure, Methacrylsäure, Itaconsäure, Maleinsäure, Fumarsäure und deren Mischungen. Bevorzugt eingesetzt wird Maleinsäureanhydrid oder Itaconsäureanhydrid. Bei den α,β-ungesättigten Carbonsäuren kann es sich beispielsweise auch um Halbamide oder Halbester ethylenisch α,β-ungesättigter Dicarbonsäuren handeln.

Die Herstellung der Addukte aus Polydienöl (A) und α,β-ungesättiger Carbonsäure oder deren Anhydride, z.B. Maleinsäureanhydrid (B) kann nach bekannten Methoden erfolgen. Im allgemeinen erhitzt man die Mischungen der Komponenten 1 bis 4 Stunden auf Temperaturen von 150 bis 250^{o}C, gegebenenfalls unter Zusatz geringer Mengen aromatischer Lösemittel, z.B. Xylol, bei gleichzeitigem Durch- oder Überleiten eines Inertgasstromes wie Stickstoff, wobei der Zusatz von 0,01 bis 0,5 Gew.%, bezogen auf die Summe von A und B, eines oder mehrerer Polymerisationsinhibitoren zweckmäßig ist. Bevorzugte Inhibitoren sind beispielsweise Hydrochinon, Hydrochinonmonomethylether, 2,5-Di-tert-butyl-hydrochinon und Benzochinon, aber auch Diphenylamin, styrolisierte Diphenylamine, p-Phenylendiaminderivate, Naphthylamin oder Thioverbindungen wie Mercaptobenzimidazol oder Di-lauryl-3,3'-thiodipropionat sowie α-dimerisiertes Methylstyrol und ihre Mischungen.

Die cyclischen Anhydride können durch Umsetzung mit Wasser, Monoalkoholen oder Monoaminen zu carboxylgruppenhaltigen Verbindungen aufgespalten werden. Als Monoalkohole können gesättigte oder ungesättigte lineare, verzweigte oder cyclische C1 bis C18-Monoalkohole verwendet werden, wie beispielsweise Methanol, Ethanol, Propanol, Isopropanol, Butanol, Isobutanol, sekundär Butanol, tertiär Butanol, Amylalkohol, Cyclohexanol, Benzylalkohol, Ethylhexylalkohol, Laurylalkohol, Isodecanol oder Alkoxyglykole, wie Butoxyethanol, Alkoxypropanole, wie Ethoxypropanol, oder Propylglykol. Bevorzugt werden verseifungsstabile Ester, die mit Hilfe von Isopropanol, sek. Butanol, Cyclohexanol, 2-Ethylhexanol-1 oder 2,2-Dimethylbutanol-1 erhalten werden.

Das Addukt aus der Komponente A mit einer α,β-ungesättigten Dicarbonsäure oder deren Anhydrid kann sodann bevorzugt durch eine Verbindung mit einer Aminogruppe partiell amidiert werden. Diese parteille Amidierung kann nach üblichen Verfahren durchgeführt werden. Beispielsweise wird das Addukt mit der Verbindung in einem entsprechenden Lösungsmittel oder in Abwesenheit eines Lösungsmittels bei 30 bis 150^{o}C in Gegenwart eines Polymerisationsinhibitors und gegebenenfalls eines Katalysators, wie einer Mineralsäure oder einer organischen Säure, umgesetzt. Bevorzugt verwendete Amine sind sekundäre und/oder primäre Amine, bevorzugt sek. Monoamine, insbesondere Alkylamine wie Dimethylamin, Diethylamin, Di-iso-propylamin, Di-n-butylamin und deren Mischungen; es können auch funktionelle Amine, wie Diethanolamin verwendet werden.

Unter partieller Amidierung des mit einer α,β-ungesättigten Dicarbonsäure (B) umgesetzten Polydienöl (A), beispielsweise eines maleinisierten Polybutadienöls, wird die ringöffnende Reaktion an bevorzugt 10 bis 90 Molprozent der vorhandenen Anhydridgruppen des Produkts verstanden.

Vor Amidierung können beispielsweise 3 bis 10 Gew.% primäres oder sekundäres Monoamin, wie vorstehend erläutert, eingesetzt werden, wobei sich die Gewichtsprozent auf die Summe der zur Herstellung des Bindemittels eingesetzten Komponenten A,B,C,D,E und des Amins bezieht.

Die partielle Amidierung verläuft in zwei Stufen:
(a) die erste Stufe öffnet den nötigen Prozentsatz für die 2-Oxazolin-Reaktion, z.B. 1 bis 10 % der Anhydridgruppen;
(b) die zweite Stufe folgt nach der Reaktion mit der Bis-(2-oxazolin)-Komponente.

Als Komponente C werden bevorzugt mehr als 1 Gew.-% Bis-(2-oxazolin) und weniger als 10 Gew.-%, besonders bevorzugt weniger als 5 Gew.-% eingesetzt.

Die Bis-(2-oxazolin)-Derivate sind durch die allgemeine Formel charakterisiert: 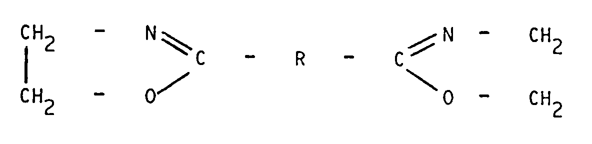
wobei R ein zweiwertiger linearer oder verzweigter Alkyl-, Cycloalkyl oder gegebenenfalls substituierter Arylrest, insbesondere der Phenylrest, ist.
Bevorzugte Bis-(2-oxazolin)-Derivate (C) sind z.B. 1,3-Phenylen-bis (2-oxazolin), 1,4-Phenylen-bis(2-oxazolin) und 1,4-Cyclohexyl-bis-(2-oxazolin).

Die Reaktion zwischen dem partiell amidierten Addukt aus Polydienöl und α,β-ungesättigter Carbonsäure, z.B. Butadienmaleinöl und dem Bis-(2-oxazolin) kann in Gegenwart, vorzugsweise aber in Abwesenheit eines organischen Lösungsmittels bei 90 bis 120^{o}C. gegebenenfalls unter Stickstoff durchgeführt werden.

Die Reaktion erfolgt nach folgendem Mechanismus: 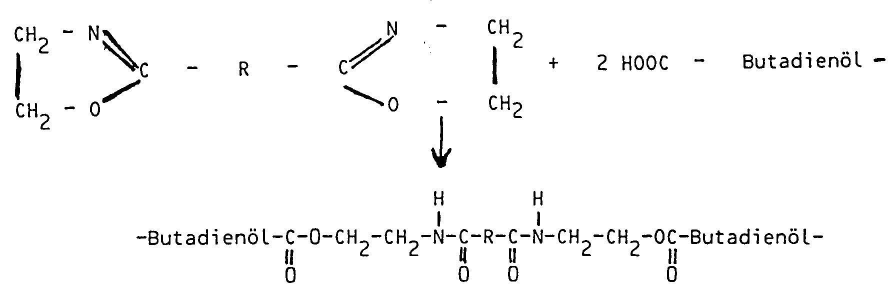
Durch diese Reaktion wird mit Hilfe von Carboxylgruppen eine Molekülvergrößerung ausgelöst, wobei die Molmasse mit ansteigender Menge der Bis-2-oxazolin-Komponente deutlich vergrößert und die Harzviskosität erhöht wird.

Ferner wird erfindungsgemäß die Amidierungsreaktion bis zu dem gewünschten Amidierungsgrad weitergeführt.

Als Komponente D werden bevorzugt weniger als 20, besonders bevorzugt unter 15 Gew.-% physikalisch härtende Harze eingesetzt.

Als physikalisch härtende Harze (härtende Bindemittelkomponente) (D) können z.B. bekannte Maleinatharze wie Alresat KM 313, Alresat KM 224, mit Kolophonium modifizierte Phenolharze wie Albertol KP 626 (Hoechst), Keton-Formaldehydharze wie Kunstharz SK (Hüls) oder Ketonharz N (BASF), welche eine rasche physikalische Trocknung des Überzugs garantieren und die z.B. bei Temperaturen von 20 bis 150^{o}C eingearbeitet werden. Sie ergeben in wäßriger Anwendungsform eine gute Lagerstabilität und bringen einen hohen Glanz im fertigen Überzug.

Um eine gleichmäßige Verteilung des physikalisch härtenden Harzes der Komponente (D) im wäßrigen Polydienbindemittel, z.B. Polybutadienbindemittel zu erreichen, wird das Harz vorteilhaft vor dem Lösen des Bindemittels in Wasser in die Harzschmelze oder die Harzlösung eingearbeitet.

Nach der Amidierung können statt oder gleichzeitig mit der Einarbeitung des physikalisch härtenden Harzes ein oder mehrere ethylenisch α,β-ungesättigte Monomeren, beispielsweise Acrylsäure- oder Methacrylsäure, die mit linearen, verzweigten, cyclischen C₁ bis C₁₂ Monoalkoholen verestert sind, zugegeben werden.

Die Monomeren können allein oder zusammen mit den härtenden Harzen verwendet werden. Bevorzugt werden Monomere in Mengen von 0,1 - 10 Gew.-%, besonders bevorzugt 0,5 - 3 Gew.-%, bezogen auf die Summe der Komponenten A, B, C, D und E, eingesetzt.

Das aus den vorher genannten Ausgangsstoffen hergestellte Addukt ist in Wasser nicht dispergierbar. Um es mit Wasser verdünnbar zu machen, werden die sauren Gruppen des Addukts zumindest teilweise neutralisiert. Eine derartige Neutralisation soll zwischen 15 bis 100 %, bevorzugt 20 bis 80 % der Carboxylgruppen erfassen. Beispiele für Neutralisationsmittel sind die nachstehend aufgeführten Amine und weiteren Neutralisationsmittel.

Zur Herstellung einer stabilen Emulsion werden die vorhandenen Anhydridgruppen gegebenenfalls in Anwesenheit von tert., sek. oder primären Aminen wie Methylamin, Ethylamin, Propylamin, Dimethylamin, Diethylamin, Dipropylamin, Trimethylamin, Triethylamin, und Triethanolamin mit Wasser hydrolysiert und die freien Carboxygruppen neutralisiert. Als basische Verbindungen, die für eine derartige Neutralisation verwendet werden können, eignen sich neben den genannten Aminen auch Ammoniak, Alkalimetallhydroxide, -oxide, -carbonate oder -hydrogencarbonate, wie beispielsweise die entsprechenden Lithium-, Natrium- und Kaliumsalze.

Der pH-Wert (20^{o}) der wäßrigen Dispersion des neutralisierten Halbamids liegt bevorzugt im Bereich von 6,0 bis 10,0, vorzugsweise 7,0 bis 9,0. Wenn der pH-Wert zu niedrig ist, kann eine Phasentrennung in der Dispersion auftreten.

Erfindungsgemäß wird die Pfropfreaktion mit den polymerisierbaren Vinylmonomeren auf dem schon polymeranalog modifizierten Polybutadienöl auf die gleiche Weise durchgeführt, wie es bei der Emulsionspolymerisation von polymerisierbaren Vinylmonomeren üblich ist, d.h. durch Umsetzen des zumindest teilweise neutralisierten, vorstehend erwähnten Produkts, mit den radikalisch polymerisierbaren ethylenisch ungesättigten Monomeren (E) in Gegenwart eines radikalischen Polymerisationsinitiators bei 10 bis 120^{o}C in wäßriger Emulsion, gegebenenfalls unter Druck. Als Polymerisationsinitiatoren finden z. B. Anwendung Azoverbindungen, wie 2,2'-Azo-bis(isobutyronitril), Peroxide wie tert. Butylperoxybenzoat oder Butylperoxy-2-ethylhexanoat oder Hydroperoxide.

Bevorzugte Monomere (E) sind Monomere, die wenigstens eine radikalisch polymerisierbare ethylenische Doppelbindung besitzen. Beispiele sind Vinyl-, Vinyliden-, Acryl- und Methacrylverbindungen, wie Styrol, α-Methylstyrol, Vinyltoluol, Acrylsäure- und Methacrylsäureester von C₁-C₁₂-Alkoholen, die linear, verzweigt oder cyclisch sein können, Allylacrylat, Allylmethacrylat, Methacrylsäure, Acrylamid und Mischungen dieser Monomeren. Bevorzugt werden harte Monomere ohne weitere funktionelle Gruppen, d.h. mit einer Glasübergangstemperatur der daraus herstellbaren Homopolymeren von 25 bis 200^{o}C. Besonders bevorzugt wird die Reaktion mit Styrol.

Erfindungsgemäß hängt die gewählte Menge der Monomeren (E) von der Art der Monomeren und dem Verwendungszweck des Endproduktes ab, liegt jedoch vorzugsweise- bei 1 bis 40 Gew.%, bezogen auf die Menge des zu pfropfenden, gegebenenfalls teilweise amidierten und esteramidierten Produkts, besonders bevorzugt über 10 und unter 35 Gew.%.

Falls notwendig, verwendet man weitere übliche Polymerisationsinhibitoren oder Polymerisationsregler (Molekulargewichtsregler) wie Dodecyl-mercaptan, tert.-Dodecylmercaptan, 2-Mercaptoethanol, 3-Mercaptopropionsäure usw.

Für die verschiedenen Einsatzzwecke liegen diese harzartigen Produkte als sehr fein disperse wäßrige Dispersionen mit einem Gehalt an festem Harz von 10 bis 60 Gew.%, bevorzugt 15 bis 45 Gew.% vor. Der hier verwendete Ausdruck "wäßrige Dispersion" umfaßt zweiphasige, wäßrige Harzsysteme, insbesondere solche, bei denen die wäßrige Phase die kontinuierliche Phase bildet, und umfaßt auch Hydrosole und kolloidale Lösungen. Die optisch klar erscheinenden wäßrigen Dispersionen haben diskontinuierliche disperse Phasen mit einem mittleren Teilchendurchmesser bevorzugt unter 500 nm.

Die erfindungsgemäßen wäßrigen Emulsionen sind wertvolle Bindemittel für Anstrichstoffe und werden mit herkömmlichen Bestandteilen, wie Trockenstoffen, z.B. Kobaltnaphthenat und Mangannaphthenat, Pigmenten, z.B. nach DIN 55944 wie Titanweiß, Calciumcarbonat und Kieselsäure, Netzmitteln, Weichmachern und/oder Verdickern und Wasser vermischt. Sie bilden wasserverdünnbare Lacke mit ausgezeichneten Trocknungseigenschaften, welche Filme mit guter Wasserfestigkeit ergeben. Weiterhin können sie mit üblichen Zusatzstoffen wie Antioxidantien, Netzmitteln, Antischaummitteln, Verlaufmitteln usw. versetzt werden.

Nach Auftragen der aus den erfindungsgemäßen Bindemitteln hergestellten Lacke auf Substrate, wie z.B. Metalle, Kunststoffoberflächen oder Holz ergeben sich leistungsfähige Grundierungsschichten mit guten lacktechnischen Eigenschaften und deutlich verbesserter Zwischenschichthaftung beim Überlackieren mit Decklacken. Das wäßrige Harz kann auch direkt ohne weitere Zusätze als Lack für die Herstellung von transparenten Überzügen eingesetzt werden. Für die Herstellung wäßriger korrosionsgeschützter Lacke sind Füllstoffe und Pigmente wie Eisenoxide, Bleioxide, Strontiumchromat, Ruß, Titandioxid, Talcum oder Bariumsulfat und Mischungen dieser und anderer üblicher feinteiliger anorganischer Substanzen geeignet.

Die pigmentierten Bindemitteldispersionen können weiterhin übliche Dispergierhilfsmittel oder übliche oberflächenaktive Mittel enthalten, wobei die letzteren vom nichtionischen oder anionischen Typ sein sollen oder eine Kombination dieser üblichen, geeigneten Typen darstellen.

In der Regel werden Pigmente und oberflächenaktive Mittel, falls sie verwendet werden, zusammen mit einem Teil des Trägerharzes in eine Paste überführt. Beispiele anderer üblicher geeigneter Zusatzstoffe, die den Überzugsmassen beigefügt werden können, sind übliche Sikkative, geeignete Netzmittel, geeignete Antischaummittel und geeignete Emulgiermittel. Häufig ist es wünschenswert, kleine Mengen von mit Wasser mischbaren organischen Lösungsmitteln wie z.B. Dioxan und Glykolethern dem Trägerharz zuzugeben, um seine Handhabung und Verarbeitung zu erleichtern.

Im allgemeinen ist es vorteilhaft, daß die pigmenthaltigen Dispersionen das Pigment und das Trägerharz in einem Verhältnis von nicht höher als 1,5 : 1 und bevorzugt nicht höher als 1 : 1 enthalten. Das Pigment kann direkt in dem erfindungsgemäßen Bindemittel angerieben oder mit Hilfe eines üblichen Pastenharzes zugemischt werden.

Das Auftragen der aus diesen Bindemitteln hergestellten Lacke geschieht nach den in der Praxis üblichen Verfahren wie Spritzen, Tauchen, Gießen, Walzen usw. Ein Zusatz von 1 bis 5 Gew.% von polyfunktionellen Carbodiimiden oder Polyisocyanaten zum Bindemittel kann eine zusätzliche Verbesserung der Trocknungszeiten bewirken.

In den nachstehenden Beispielen wird die Erfindung erläutert. Alle Angaben über Teile und Prozente beziehen sich auf das Gewicht.

### Vergleichsversuch

### Maleinatöl 1/3 halbamidiert

### a. Basispolymer

In einem mit Stickstoffeinleitungsrohr, Rührer sowie Kühl- bzw. Heizvorrichtung versehenen 4 L-Glaskolben werden 1707 g Polybutadienöl mit einer Molmasse (Mn) von 1500, einer Viskosität von ca. 800 mPa.s (20^{o}) und ca. 75 % 1,4-cis-, ca. 24 % 1,4-trans- und 1 % Vinyl-Doppelbindungen und 570 g Polybutadienöl mit einer Molmasse (Mn) von 3000, einer Viskosität von ca. 3000 mPa.s (20^{o}) und ca. 80 % 1,4-cis-, ca. 19 % 1,4-trans- und 1 % Vinyl-Doppelbindungen eingewogen und nach Zugabe von 424 g Maleinsäureanhydrid, 1,2 g Phenyl-α-naphthylamin, 0,3 g Acetylaceton, 0,3 g N,N'-Diphenyl-p-phenylendiamin und 190 g Xylol unter Durchleiten eines schwachen Stickstoffstromes auf 190 bis 210^{o}C aufgeheizt und 8 Stunden bei dieser Temperatur gehalten. Man erhält ein viskoses Öl mit einer Säurezahl nach Anhydridöffnung mit Wasser von 150. Nach Abkühlen auf 100^{o}C werden 105 g Diethylamin in 2 Stunden unter Rückflußkühlung zugegeben und die Mischung 2 Stunden bei dieser Temperatur gerührt, bis eine Säurezahl von 100 erreicht ist.

### b. Vinylierung

Dieses maleinisierte Polybutadienöl (312 g) wird mit 4,5 g Antihautmittel Additol XL 297 (Hoechst) in einem mit Stickstoffeinleitungsrohr, Rührer sowie Kühl- bzw. Heizvorrichtung versehenen 4 L-Glaskolben gemischt, unter Durchleiten eines schwachen Stickstoffstromes auf 80^{o}C aufgeheizt und unter Rühren mit 37 g Triethylamin und 900 g entionisiertem Wasser versetzt. Die erhaltene Dispersion wird mit 160 g Styrol in Anwesenheit von 5 g 2,2'-Azo-bis-(2-methylbutannitril) und 0,5 g dimerisiertem α-Methylstyrol versetzt. Das Gemisch wird 6 Stunden unter Stickstoff bei 90^{o}C gerührt. Man erhält eine homogene Polymeremulsion mit folgenden Eingeschaften: pH-Wert 8,7, Feststoffgehalt 31 Gew.%, Säurezahl 71, Viskosität 1811 mPa.s (20^{o}C) , nach Trocknen von 1 Stunde bei 150^{o}C.

### Beispiel 1

### Maleinatöl zu 1/3 halbamidiert und umgesetzt mit Bis-(2-oxazolin)

### a. Basispolymer

In einem mit Stickstoffeinleitungsrohr, Rührer sowie Kühl- bzw. Heizvorrichtung versehenen 4 L-Glaskolben werden 2280 g Polybutadienöl mit einer Molmasse (Mn) von 1500, einer Viskosität von ca. 800 mPa.s (20^{o}C) und ca. 75 % 1,4-cis-, ca. 24 % -trans- und 1 % Vinyl-Doppelbindungen eingewogen und nach Zugabe von 424 g Maleinsäureanhydrid, 1,2 g Phenyl-α-naphthylamin, 0,2 g Acetylaceton, 0,2 g N,N'-Diphenl-p-phenylendiamin und 190 g Xylol unter Durchleiten eines schwachen Stickstoffstromes auf 190 bis 210^{o}C aufgeheizt und 8 Stunden bei dieser Temperatur gehalten. Man erhält ein viskoses Öl mit einer Säurezahl nach Anhydridöffnung mit Wasser von 165. Nach Abkühlen auf 100 ^{o}C werden 18 g Diethylamin in 2 Stunden unter Rückflußkühlung zugegeben und die Mischung bei dieser Temperatur gerührt. Es wird danach auf 70^{o}C abgekühlt, bei dieser Temperatur 27 g 1,4-Phenylen-bis(2-oxazolin) zugegeben und nach Aufheizen auf 110^{o}C 3 Stunden bei dieser Temperatur gehalten.Nach Zugabe von 69 g Diethylamin wird weitere 2 Stunden bei 100^{o}C gerührt, so daß ein Harz mit einer Säurezahl von ca. 95 resultiert.

### b. Vinylierung

Dieses maleinisierte und teilweise halbamidierte Polybutadienöl (312 g) wird mit 4,5 g Antihautmittel Additol XL 297 (Hoechst) in einem mit Stickstoffeinleitungsrohr, Rührer sowie Kühl- bzw. Heizvorrichtung versehenen 4 L-Glaskolben gegeben, unter Durchleiten eines schwachen Stickstoffstromes auf 80^{o}C aufgeheizt und unter Rühren mit 37 g Triethylamin und 900 g entionisiertem Wasser gemischt. Die erhaltene Emulsion wird mit 160 g Styrol in Anwesenheit von 5 g 2,2'-Azo-bis-(2-methylbutannitril) und 0,5 g dimerisiertem α-Methylstyrol versetzt. Das Gemisch wird 6 Stunden unter Stickstoff bei 90^{o}C gerührt. Man erhält eine homogene Polymeremulsion mit folgenden Eigenschaften: pH-Wert 8,5, Feststoffgehalt nach Trocknen von 1 Stunde bei 150^{o}C 33 Gew.%, Säurezahl 70, Viskosität 2100 mPa.s.

### Beispiel 2

### Maleinatöl halbamidiert und mit Bis-(2-oxazolin) und einer zweiten Bindemittelkomponente umgesetzt

### a. Basispolymer

In einem mit Stickstoffeinleitungsrohr, Rührer sowie Kühl- bzw. Heizvorrichtung versehenen 2 L Planschliff-Reaktionsgefäß werden 328 g halbamidiertes mit Bis-(2-oxazolin) umgesetztes Polybutadienmaleinatöl (wie in Beispiel 1) mit 24 g Alresat KM 224 auf 130^{o}C erhitzt und solange bei 130^{o}C gehalten, bis eine klare, homogene Schmelze entstanden ist. Danach auf 90^{o}C abkühlen und binnen 15 Minuten 38,8 g Triethylamin und 116,7 g vollentsalztes Wasser zulaufen lassen. Das homogengerührte Produkt wird binnen 20 Minuten mit 831 g vollentsalztem Wasser gemischt. Man erhält eine sehr feindisperse Emulsion.

### b. Vinylierung

Zu dieser Polybutadienöldispersion wird unter Rühren eine Mischung von 114 g Styrol, 6,9 g dimerisiertem α-Methylstyrol und 3,15 g 2,2'-Azo-bis-(2-methylbutannitril) binnen 4 Stunden gleichmäßig zugegeben und 4 Stunden unter Stickstoff bei 90^{o}C nachgerührt. Man erhält eine Polymeremulsion mit folgenden Werten: Feststoffgehalt nach Trocknen von 1 Stunde bei 150^{o}C 33,8 Gew.%, pH-Wert 8,7, Säurezahl 83,8.

### Herstellung von Grundierungen

Die Herstellung einer zinkpigmenthaltigen Korrosionsschutzgrundierung erfolgt in der üblichen Weise. Die Bindemitteldispersion gemäß den Beispielen wird in einem Mischbehälter vorgelegt. Unter schnellem Rühren werden die Pigmente und Zusatzstoffe langsam zugegeben und eingerührt. Dieses vordispergierte Mahlgut wird anschließend auf einer Perlmühle bei ca. 3000 Upm und einer Temperatur von 42^{o}C dispergiert. Der fertige Lack wird 24 Stunden nach dem Anreiben mit Wasser auf eine Spritzviskosität entsprechend einer Auslaufzeit von 30 Sekunden, gemessen in einem Fließbecher mit 4 mm Düse nach DIN 53 211, eingestellt. Alle Lacke wurden auf pH-Wert 9 miteingestellt.

| **Anreiberezeptur** | | **Beispiel g** | |
|---|---|---|---|
| Bindemitteldispersion | | 330 | |
| Eisenoxid | | 58 | |
| Zinkphosphat | | 58 | |
| Zinkoxid | | 6 | |
| Lithopone | | 58 | |
| Mikrotalkum | | 28 | |
| Schaumverhinderungsmittel | | 1 | |
| Wasser | | 15 | |
| Mahlgut | | 554 | |

| Lackierungs- | Vergleichsversuch | Beispiele | |
|---|---|---|---|
| | | 1 | 2 |
| Viskosität entsprechend Auslaufzeit DIN-Becher 4 mm/20^{o}C (sec) | 35 | 35 | 35 |

Die aus dem erfindungsgemäßen Bindemittel hergestellten Lacke wurden auf entfetteten Karosserieblechen gespritzt und ohne Decklack geprüft. Dabei wurden folgende Ergebnisse erhalten:

**Tabelle 1**

| Filmeigenschaften auf Karosserieblechen | | | |
|---|---|---|---|
| | Vergleichsversuch | 1 | 2 |
| Trockenfilmdicke (µm) | 30 | 30 | 30 |
| Trocknung 20 Min/80^{o}C Pendelhärte DIN 53153 (sec) | 42 | 85 | 96 |
| Haftfestigkeit | 1 | 1 | 1 |
| Erichsentiefung DIN 53156 (mm) | 5 | 5 | 4,5 |

| Wasserfestigkeit Trocknung 20 Min/80^{o}C | | | |
|---|---|---|---|
| - nach 1 Stunde | unverändert | unverä. | unverä. |
| - nach 3 Stunden | " | " | " |
| - nach 24 Stunden | ausgebleicht Blasen | " | " |

| Korrosionsschutz Salzsprühtest (DIN 40021) | | | |
|---|---|---|---|
| - nach 120 Stunden | Blasen | unverändert | unverändert |
| - nach 240 Stunden | Blasen | leichte Ausbleichung | unverändert |
| | | leichte reversible Anquellung | |

| Schwitzwassertest (DIN 50017) | | | |
|---|---|---|---|
| - nach 120 Stunden | Blasen | unverändert | unverändert |
| - nach 240 Stunden | Blasen | leichte Ausbleichung | unverändert |
| | | leichte reversible Anquellung | |

## Patentansprüche

1. Durch Basen zumindest teilweise neutralisiertes Bindemittel zur Herstellung sikkativierter wäßriger Überzugsmittel, auf der Basis eines teilweise mit Bis-(2-oxazolin) vernetzten Polydienharzes, mit einer Säurezahl von 50 bis 100, das erhältlich ist durch wasserfreie Umsetzung von
A. 40 bis 80 Gew.-% eines oder mehrer Polydienöle mit einem Gewichtsmittel der Molmasse von 300 bis 5000,
B. 5 bis 25 Gew.-% einer oder mehrer ethylenisch α,β-ungesättigter Carbonsäuren oder deren Anhydriden,
C. 1 bis 10 Gew.-% eines oder mehrerer Bis-(2-oxazoline) und
D. 0 bis 20 Gew.-% eines oder mehrerer physikalisch härtender Harze und/oder ethylenisch ungesättigter Monomerer,
Überführung mittels zumindest teilweiser Neutralisation in ein wäßriges Medium und Reaktion mit
E. 1 bis 40 Gew.-% eines oder mehrerer ethylenisch ungesättigter Monomerer in Gegenwart eines öllöslichen, freie Radikale bildenden Polymerisationsinitiators und gegebenenfalls eines Polymerisationsreglers,
wobei sich die vorstehenden Gewichtsprozente jeweils auf die Summe der Komponenten A,B,C,D und E beziehen.

2. Bindemittel nach Anspruch 1, dadurch gekennzeichnet, daß die ethylenisch α,β-ungesättigte Carbonsäure Komponente B eine α,β-ungesättigte Monocarbonsäure oder das Halbamid oder der Halbester einer ethylenisch α,β-ungesättigten Dicarbonsäure ist.

3. Bindemittel nach Anspruch 2, dadurch gekennzeichnet, daß das Halbamid erhalten wurde durch Umsetzung des Anhydrids einer ethylenisch α,β-ungesättigten Dicarbonsäure mit primären oder sekundären Monoaminen.

4. Bindemittel nach einem der Ansprüche 1 bis 3, dadurch gekennzeichnet, daß 15 bis 100 % der Carboxylgruppen durch Basen neutralisiert sind.

5. Verfahren zur Herstellung eines durch Basen zumindest teilweise neutralisierten Bindemittels gemäß einem der vorhergehenden Ansprüche, dadurch gekennzeichnet, daß man ohne Wasserzusatz
A. 40 bis 80 Gew.-% eines oder mehrer Polydienöle mit einem Gewichtsmittel der Molmasse von 300 bis 5000,
B. 5 bis 25 Gew.-% einer oder mehrer ethylenisch α,β-ungesättigter Carbonsäuren,
C. 1 bis 10 Gew.-% eines oder mehrerer Bis-(2-oxazoline) und
D. 0 bis 20 Gew.-% eines oder mehrerer physikalisch härtender Harze und/oder ethylenisch ungesättigter Monomerer,
umsetzt, das Reaktionsprodukt mittels zumindest teilweiser Neutralisation in ein wäßriges Medium überführt und mit
E. 1 bis 40 Gew.-% eines oder mehrerer ethylenisch ungesättigter Monomerer
in Gegenwart eines öllöslichen, freie Radikale bildenden Polymerisationsinitiators und gegebenenfalls eines Polymerisationsreglers umsetzt,
wobei sich die Gewichtsprozente jeweils auf die Summe der Komponenten A,B,C,D und E beziehen.

6. Verfahren nach Anspruch 5, dadurch gekennzeichnet, daß man als Carbonsäure der Komponente B eine oder mehrere ethylenisch α,β-ungesättigte Monocarbonsäuren verwendet oder daß man das Anhydrid einer ethylenisch α,β-ungesättigten Dicarbonsäure einsetzt und mit einem primären oder sekundären Monoamin in das entsprechende Halbamid überführt.

7. Verfahren nach einem der Ansprüche 5 oder 6, dadurch gekennzeichnet, daß es stufenweise durchgeführt wird, wobei zunächst die Komponenten A und B zur Reaktion gebracht werden, beim Einsatz eines Dicarbonsäureanhydrids anschließend mit einem primären und/oder sekundären Monoamin umgesetzt wird, worauf mit dem Bis-(2-oxazolin) der Komponente C umgesetzt wird, anschließend gegebenenfalls das physikalisch härtende Harz der Komponente D zugesetzt wird und/oder die Reaktion mit den ungesättigten Monomeren der Komponente D erfolgt, worauf in die wäßrige Phase überführt und weiter die Komponente E zugeführt wird.

8. Verwendung der Bindemittel gemäß einem der Ansprüche 1 bis 4 in wäßrigen Überzugsmitteln.

9. Verwendung nach Anspruch 8 in wäßrigen Lacken, in wäßrigen Grundierungsmitteln oder wäßrigen Füllermassen.

10. Verwendung der Bindemittel gemäß einem der Ansprüche 1 bis 4 in wäßrigen Überzugsmitteln zur Herstellung von Einschicht- oder Mehrschichtaufbauten.

## Claims

1. A binder vehicle which is at least partially neutralised by bases for the production of aqueous drying agent coating media based on a polydiene resin which is partially crosslinked with bis-(2-oxazoline), which has an acid number of 50 to 100, and which is obtainable by the anhydrous reaction of
A. 40 to 80 % by weight of one or more polydiene oils with a weight average molecular weight of 300 to 5000.
B. 5 to 25 % by weight of one or more ethylenically α,β-unsaturated carboxylic acids or anhydrides thereof.
C. 1 to 10 % by weight of one or more bis-(2-oxazolines), and
D. 0 to 20 % by weight of one or more physically hardening resins and/or ethylenically unsaturated monomers,
conversion into an aqueous medium by means of at least partial neutralisation. and reaction with
E. 1 to 40 % by weight of one or more ethylenically unsaturated monomers in the presence of an oil-soluble, free radical-forming polymerisation initiator and optionally of a polymerisation regulator.
wherein the above percentages by weight are each based on the sum of components A, B, C, D and E.

2. A binder vehicle according to claim 1, characterised in that the ethylenically α,β-unsaturated carboxylic acid component B is an α,β-unsaturated monocarboxylic acid or the semi-amide or the semi-ester of an ethylenically α,β-unsaturated dicarboxylic acid.

3. A binder vehicle according to claim 2, characterised in that the semi-amide has been obtained by the reaction of the anhydride of an ethylenically α,β-unsaturated dicarboxylic acid with primary or secondary monoamines.

4. A binder vehicle according to any one of claims 1 to 3, characterised in that 15 to 100 % of the carboxyl groups are neutralised by bases.

5. A method of producing a binder vehicle which is at least partially neutralised by bases according to any one of the preceding claims, characterised in that
A. 40 to 80 % by weight of one or more polydiene oils with a weight average molecular weight of 300 to 5000,
B. 5 to 25 % by weight of one or more ethylenically α,β-unsaturated carboxylic acids,
C. 1 to 10 % by weight of one or more bis-(2-oxazolines), and
D. 0 to 20 % by weight of one or more physically hardening resins and/or ethylenically unsaturated monomers
are reacted without the addition of water, the reaction product is converted into an aqueous medium by means of at least partial neutralisation, and is reacted with
E. 1 to 40 % by weight of one or more ethylenically unsaturated
in the presence of an oil-soluble, free radical-forming polymerisation initiator and optionally of a polymerisation regulator,
wherein the above percentages by weight are each based on the sum of components A, B, C, D and E.

6. A method according to claim 5, characterised in that one or more ethylenically α,β-unsaturated monocarboxylic acids are used as the carboxylic acid of component B or the anhydride of an ethylenically α,β-unsaturated dicarboxylic acid is used and is converted into the corresponding semi-amide with a primary or secondary monoamine.

7. A method according to either one of claims 5 or 6, characterised in that it is conducted in stages, wherein components A and B are first reacted, and when using a carboxylic acid anhydride reaction is subsequently effected with a primary and/or secondary monoamine, whereupon component C is reacted with the bis-(2-oxazoline), subsequently optionally the physically hardening resin of component D is added and/or the reaction with the unsaturated monomers of component D is effected, whereupon conversion is effected to an aqueous phase and component E is subsequently supplied.

8. Use of the binder vehicles according to any one of claims 1 to 4 in aqueous coating media.

9. A use according to claim 8 in aqueous lacquers, in aqueous primer media or aqueous primer surfacer compositions.

10. Use of the binder vehicles according to any one of claims 1 to 4 in aqueous coating media for the production of single-coat or multi-coat structures.

## Revendications

1. Liant neutralisé en partie au moins par des bases pour la préparation de produits de revêtement aqueux siccativés, à base d'une résine de polydiène réticulée en partie par une bis-(2-oxazoline), d'indice d'acide 50 à 100, qu'on obtient en faisant réagir en milieu anhydre
A. 40 à 80 % en poids d'une ou plusieurs huiles de polydiènes, de poids moléculaire, moyenne en poids, 300 à 5 000,
B. 5 à 25 % en poids d'un ou plusieurs acides carboxyliques à insaturation α,β-éthylénique ou leurs anhydrides,
C. 1 à 10 % en poids d'une ou plusieurs bis-(2-oxazolines) et
D. 0 à 20 % en poids d'une ou plusieurs résines à durchissement physique et/ou de monomères à insaturation éthylénique,
en transférant ensuite, par neutralisation au moins partielle, dans un milieu aqueux, et en faisant réagir avec
E. 1 à 40 % en poids d'un ou plusieurs monomères à insaturation éthylénique, en présence d'un inducteur de polymérisation soluble dans l'huile, formant des radicaux libres, et le cas échéant d'un régulateur de la polymérisation,
tous les pourcentages indiqués se rapportant à la somme des composants A, B, C, D et E.

2. Liant selon la revendication 1, caractérisé en ce que l'acide carboxylique à insaturation α,β-éthylénique, composant B, est un acide monocarboxylique α,β insaturé ou l'hémi-amide ou l'hémi-ester d'un acide dicarboxylique à insaturation α,β-éthylénique.

3. Liant selon la revendication 2, caractérisé en ce que l'hémi-amide a été obtenu par réaction de l'anhydride d'un acide dicarboxylique à insaturation α,β-éthylénique avec des mono-amines primaires ou secondaires.

4. Liant selon l'une des revendications 1 à 3, caractérisé en ce que 15 à 100 % des groupes carboxyle sont neutralisés par des bases.

5. Procédé de préparation d'un liant neutralisé en partie au moins par des bases selon l'une des revendications qui précèdent, caractérisé en ce que, sans adjonction d'eau, on fait réagir
A. 40 à 80 % en poids d'une ou plusieurs huiles de polydiènes, de poids moléculaire, moyenne en poids, 300 à 5 0000,
B. 5 à 25 % en poids d'un ou plusieurs acides carboxyliques à insaturation α,β-éthylénique,
C. 1 à 10 % en poids d'une ou plusieurs bis-(2-oxazolines), et
D. 0 à 20 % en poids d'une ou plusieurs résines à durcissement physique et/ou de monomères à insaturation étnylénique, on transfère le produit de réaction, par neutralisation au moins partielle, dans un milieu aqueux, et on fait réagir avec
E. 1 à 40 % en poids d'un ou plusieurs monomères à insaturation éthylénique, en présence d'un inducteur de polymérisation soluble dans l'huile, formant des radicaux libres, et le cas échéant d'un régulateur de polymérisation,
tous les pourcentages indiqués se rapportant à la somme des composants A, B, C, D, et E.

6. Procédé selon la revendication 5, caractérisé en ce que l'acide carboxylique du composant B consiste en un ou plusieurs acides monocarboxyliques à insaturation α,β-éthylénique ou bien en ce que l'on utilise l'anhydride d'un acide dicarboxylique à insaturation α,β-éthylénique qu'on convertit en hémi-amide par réaction avec une mono-amine primaire ou secondaire.

7. Procédé selon l'une des revendications 5 ou 6, caractérisé en ce que l'on opère en plusieurs stades on fait d'abord réagir les composants A et B puis, dans le cas où on utilise un anhydride d'acide dicarboxylique, on le fait réagir avec une mono-amine primaire ou secondaire, on fait ensuite réagir avec la bis-(2-oxazoline) du composant C, on ajoute ensuite le cas échéant la résine à durcissement physique du composant D et/ou on procède à la réaction avec les monomères insaturés du composant D, on passe ensuite dans la phase aqueuse et on ajoute le composant E.

8. Utilisation des liants selon l'une des revendications 1 à 4 dans des produits de revêtement aqueux.

9. Utilisation selon la revendication 8, dans des peintures aqueuses, des produits d'apprêt ou des mastics aqueux.

10. Utilisation des liants selon l'une des revendications 1 à 4 dans des produits de revêtement aqueux servant à l'application de revêtements à une seule couche ou à plusieurs couches.
